(19) Europäisches Patentamt / European Patent Office / Office européen des brevets

(11) **EP 2 433 428 B1**

(12) **FASCICULE DE BREVET EUROPEEN**

(45) Date de publication et mention
de la délivrance du brevet:
**06.03.2019 Bulletin 2019/10**

(21) Numéro de dépôt: **10718230.5**

(22) Date de dépôt: **12.05.2010**

(51) Int Cl.:
*H04N 19/159* (2014.01)   *H04N 19/172* (2014.01)
*H04N 19/149* (2014.01)   *H04N 19/61* (2014.01)
*H04N 19/124* (2014.01)   *H04N 19/126* (2014.01)
*H04N 19/152* (2014.01)   *H04N 19/194* (2014.01)

(86) Numéro de dépôt international:
**PCT/EP2010/056575**

(87) Numéro de publication internationale:
**WO 2010/133498 (25.11.2010 Gazette 2010/47)**

(54) **PROCEDE ET DISPOSITIF DE COMPRESSION D' UNE SEQUENCE VIDEO**

VERFARHEN UND VORRICHTUNG ZUR VIDEOKOMPRIMIERUNG

VIDEO COMPRESSION METHOD AND APPARATUS

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **18.05.2009 FR 0953262**

(43) Date de publication de la demande:
**28.03.2012 Bulletin 2012/13**

(73) Titulaire: **Nintendo European Research and
Development
75001 Paris (FR)**

(72) Inventeurs:
• **DELATTRE, Alexandre
F-75001 Paris (FR)**
• **GOMEZ, Edouard
F-75001 Paris (FR)**

(74) Mandataire: **Santarelli
49, avenue des Champs-Elysées
75008 Paris (FR)**

(56) Documents cités:
**EP-A- 1 524 860     WO-A-2005/011255**

• **CAI J ET AL: "Two-pass video encoding for
low-bit-rate streaming applications" VISUAL
COMMUNICATIONS AND IMAGE PROCESSING;
21-1-2002 - 23-1-2002; SAN JOSE, 21 janvier 2002
(2002-01-21), XP030080516**

• **LIN ET AL: "Gradient-based buffer control
technique for MPEG" PROCEEDINGS OF SPIE
VISUAL COMMUNICATIONS AND IMAGE
PROCESSING, mai 1995 (1995-05), XP002567701**

• **WESTERINK P H ET AL: "Two-pass MPEG-2
variable-bit-rate encoding" IBM JOURNAL OF
RESEARCH AND DEVELOPMENT,
INTERNATIONAL BUSINESS MACHINES
CORPORATION, NEW YORK, NY, US, vol. 43, no.
4, 4 juillet 1999 (1999-07-04), pages 471-488,
XP002395114 ISSN: 0018-8646**

• **YUE YU ET AL: "A Novel Two-Pass VBR Coding
Algorithm for Fixed-Size Storage Application"
IEEE TRANSACTIONS ON CIRCUITS AND
SYSTEMS FOR VIDEO TECHNOLOGY, IEEE
SERVICE CENTER, PISCATAWAY, NJ, US, vol.
11, no. 3, 1 mars 2001 (2001-03-01), XP011014182
ISSN: 1051-8215**

• **HOANG D T ET AL: "Lexicographic bit allocation
for MPEG video coding" IMAGE PROCESSING,
1997. PROCEEDINGS., INTERNATIONAL
CONFERENCE ON SANTA BARBARA, CA, USA
26-29 OCT. 1997, LOS ALAMITOS, CA, USA,IEEE
COMPUT. SOC, US, vol. 1, 26 octobre 1997
(1997-10-26), pages 322-325, XP010254173 ISBN:
978-0-8186-8183-7**

• **NEVA CHERNIAVSKY ET AL: "MultiStage: A
MINMAX Bit Allocation Algorithm for Video
Coders" IEEE TRANSACTIONS ON CIRCUITS
AND SYSTEMS FOR VIDEO TECHNOLOGY, IEEE
SERVICE CENTER, PISCATAWAY, NJ, US, vol.
17, no. 1, 1 janvier 2007 (2007-01-01), pages 59-67,
XP011152524 ISSN: 1051-8215**

• MOHSENIAN N ET AL: "Single-pass constant-and variable-bit-rate MPEG-2 video compression", IBM JOURNAL OF RESEARCH AND DEVELOPMENT, INTERNATIONAL BUSINESS MACHINES CORPORATION, NEW YORK, NY, US, vol. 43, no. 4, 1 July 1999 (1999-07-01), pages 489-509, XP002216512, ISSN: 0018-8646

**Description**

La présente invention concerne le domaine de la compression vidéo et plus particulièrement le contrôle du débit de la séquence compressée générée.

Il est connu de compresser la vidéo par des algorithmes du type MPEG qui utilisent, entre autres, une technique de quantification. Cette quantification consiste à diviser les valeurs numériques représentant les fréquences de l'image après l'étape de DCT (*Discrete Cosine Transform* en anglais) pour diminuer la dynamique de ces valeurs ce qui permet de réduire l'information à compresser. Le paramètre de quantification est donc le facteur par lequel on divise les données qui détermine le nombre de bits nécessaires au codage de chaque point. L'impact visuel de cette quantification va dépendre du contenu de l'image. À débit égal, les images de faible complexité vont supporter une forte diminution de la dynamique sans impact sensible, tandis que sur les images de forte complexité une forte diminution de la dynamique est rapidement très sensible.

Lorsque l'on compresse une séquence vidéo, le facteur de quantification est donc généralement variable et fixé pour chaque image en fonction d'un ensemble de caractéristiques de l'image. La fixation de ce paramètre va directement influer sur la quantité de données résultant de la compression pour cette image, ainsi que sur la qualité ressentie de l'image.

De façon analogue, certaines techniques de compression contrôlent la taille et la qualité des images en faisant varier un facteur $\lambda$ dit « Lagrangien » qui permet d'optimiser le rendement « Débit/Distorsion » en faisant appel aux techniques d'optimisation mathématique de Lagrange comme décrit par exemple dans le brevet FR2907989.

Le document suivant divulgue un procédé de codage vidéo comprenant une première passe, au cours de laquelle des courbes débit-distorsion sont générées et des changements de scène sont détectés, et une seconde passe, au cours de laquelle le débit de chaque scène peut être ajusté en fonction notamment du niveau simulé du tampon du récepteur :

CAI J ET AL: "Two-pass video encoding for low-bit-rate streaming applications", VISUAL COMMUNICATIONS AND IMAGE PROCESSING; 21-1-2002 - 23-1-2002; SAN JOSE, 21 janvier 2002 (2002-01-21).

Dans cette invention, ce « facteur de compression » peut avantageusement se substituer au quantificateur. Les deux grandeurs sont d'ailleurs parfois utilisées de façon liée par une loi du type $\lambda = e^Q$.

Lors d'une compression sans contraintes, de type VBR (*Variable Bit Rate* en anglais) par exemple, l'objectif est généralement d'obtenir une qualité visuelle constante tout au long de la vidéo, ce qui revient généralement à rechercher de faibles variations du « facteur de compression » que nous allons appeler 'C' et pouvant correspondre au facteur de quantification 'Q' ou au facteur Lagrangien '$\lambda$'.

La compression à débit constant, dit CBR (*Constant Bit Rate* en anglais), qui fixe la quantité de données devant être générée par la compression pour chaque seconde de séquence, indépendamment du contenu de l'image, provoque des variations brusques du facteur de compression utilisé entre images successives. Ces variations peuvent entraîner des variations brusques de la qualité perçue de la vidéo par l'utilisateur et donc dégrader sa perception de la qualité du service.

L'invention vise à résoudre les problèmes précédents par un procédé de compression à débit constant, utilisant une étape de normalisation du facteur de compression. Ce qui permet de lisser les variations de ce facteur et de supprimer les variations brusques de qualité d'image dans les séquences résultantes. Par ce moyen, la qualité de service perçue est améliorée.

L'invention concerne un procédé de compression d'une séquence vidéo qui comprend une première étape de compression de la séquence au cours de laquelle sont extraits pour chaque image sa taille, le facteur de compression utilisé ; une étape de normalisation des valeurs du facteur de compression associé à chaque image pour optimiser ce facteur sous la contrainte du tampon du récepteur prévu pour la décompression de la séquence et une seconde étape de compression de la séquence utilisant les valeurs normalisées du facteur de compression pour chaque image de la séquence.

Selon un mode particulier de réalisation de l'invention, l'étape de normalisation comprend la simulation du niveau de remplissage du tampon du récepteur prévu pour la décompression de la séquence.

Selon un mode particulier de réalisation de l'invention, la simulation du niveau de remplissage du tampon du récepteur prévu pour la décompression de la séquence comprend une étape d'initialisation du tampon à une valeur initiale arbitraire ; pour chaque nouvelle image de la séquence, le calcul d'un nouveau niveau de remplissage en fonction de la taille de la nouvelle image et en tenant compte de la consommation des données par la décompression ; dans le cas où il n'y a ni débordement ni famine du tampon, on boucle sur l'image suivante ; dans le cas où il y a débordement ou famine, une étape de détermination d'une image déjà traitée de la séquence associée à une valeur extrémale du facteur de compression associé à ces images déjà traitées ; une étape de modification de la valeur du facteur de compression associée à cette image déterminée, diminuant la taille de l'image en cas de famine, augmentant la taille de l'image en cas de débordement ; une étape de retour arrière sur le calcul de la simulation jusqu'à cette image déterminée.

L'étape de détermination d'une image déjà traitée de la séquence associée à la valeur extrémale du facteur de compression associé à ces images déjà traitées consiste à choisir la plus ancienne.

Selon un mode particulier de réalisation de l'invention, le procédé comprend en outre une étape d'optimisation locale de la valeur du facteur de compression de chaque image.

Selon un mode particulier de réalisation de l'invention, l'étape d'optimisation locale de la valeur du facteur de compression 'C' est une étape de descente de gradient pour minimiser une distance mesurée entre les valeurs locales de 'C' et les valeurs locales optimales de 'C'.

Selon un mode particulier de réalisation de l'invention, le procédé comprend en outre une étape d'ajustement de la valeur du facteur de compression en fonction du type, 'I' ou 'P', de l'image, selon que l'image est compressée de manière intrinsèque ou pas.

Selon un mode particulier de réalisation de l'invention, le procédé comprend une étape d'estimation de la taille de l'image compressée en fonction de la valeur du facteur de compression à l'aide d'un modèle liant ces valeurs.

Selon un mode particulier de réalisation de l'invention, le procédé précédemment décrit est appliqué sur une séquence formant une fenêtre glissante du flux diffusé.

L'invention concerne également un dispositif de compression d'une séquence d'image qui comprend des moyens pour effectuer une première étape de compression de la séquence ; des moyens de normalisation des valeurs du facteur de compression associé à chaque image pour optimiser ce facteur sous la contrainte du tampon du récepteur prévu pour la décompression de la séquence et des moyens d'effectuer une seconde étape de compression de la séquence utilisant les valeurs normalisées du facteur de compression pour chaque image de la séquence.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 illustre le principe de compression d'une séquence vidéo ;
La Fig. 2 illustre le procédé de compression selon un mode de réalisation de l'invention ;
La Fig. 3 illustre le procédé de l'étape de normalisation selon un mode de réalisation de l'invention.

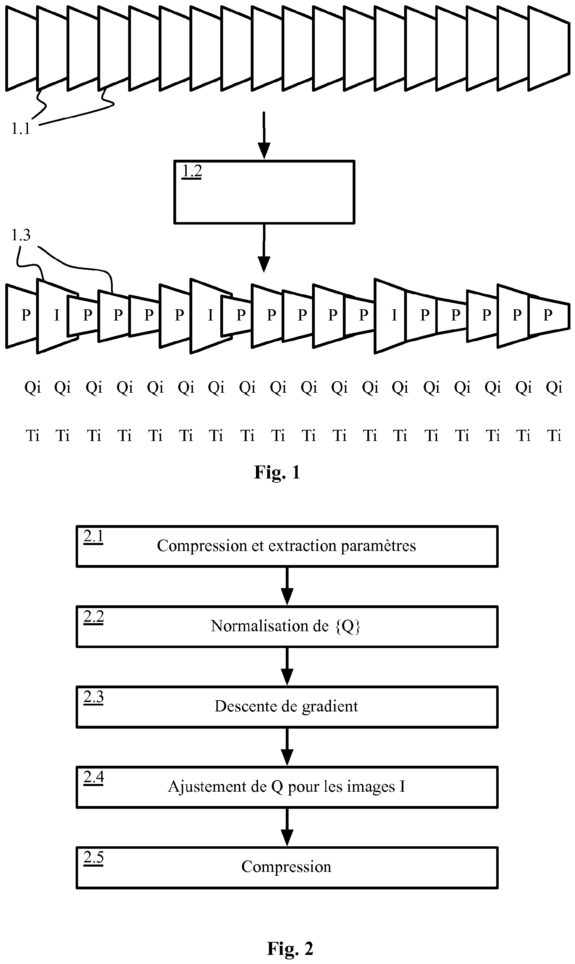

La Fig. 1 illustre le principe de la compression d'une séquence vidéo. Cette séquence est composée d'une succession d'images de taille identique 1.1. Pour compresser cette séquence, le module de compression 1.2 va compresser chaque image pour obtenir une séquence compressée 1.3. De manière générale, et typiquement dans les algorithmes de compression de la famille MPEG, certaines images sont compressées intrinsèquement sans faire appel à des informations extérieures à l'image courante. Ces images sont appelées images 'I'. D'autres images sont compressées en tenant compte d'informations appartenant à d'autres images, les précédant ou les suivant, dans la séquence vidéo. Ces images sont généralement appelées images 'P' (ou 'B', selon les usages). Les images 'P' permettent d'exploiter la redondance temporelle lors de la compression. Par exemple, on compresse un macro bloc de l'image en stockant la différence avec un macro bloc de l'image précédente et la situation relative dans l'image de ce macro bloc précédent. La compression régulière d'images 'I' intrinsèque est nécessaire, car ces images sont les seuls points de départ du processus de décompression.

Dans ce processus de compression, les images ne sont pas toutes équivalentes. Outre la compression de type 'I' ou 'P', la complexité de chaque image ou la quantité d'informations contenues dans l'image va déterminer la compression. On parle ici de compression destructive où de l'information est perdue lors de la compression. On définit la qualité de l'image en fonction de la différence entre l'image de départ non compressée et le résultat, c'est-à-dire l'image obtenue par décompression de l'image compressée. Dans cette image résultat de l'information est perdue, l'image est donc dégradée. On appelle distorsion la différence entre l'image d'origine et l'image résultant du processus compression décompression. Un autre paramètre de la compression est, pour chaque image, la taille de l'image compressée ou le niveau de compression appliqué. On comprend que pour une image donnée, plus on augmente le niveau de compression, plus on diminue la taille de l'image compressée et plus on dégrade le niveau de qualité de l'image obtenue. Pour un niveau de compression donné, une image de faible complexité est compressée avec une meilleure qualité qu'une image complexe ou, dit autrement, pour un niveau de qualité donné, une image de faible complexité pourra être compressée à un niveau plus élevé et conduire à une image compressée de plus petite taille qu'une image complexe.

Une compression à débit constant ou CBR signifie que le débit de la séquence d'images compressées est constant, comme son nom l'indique, c'est-à-dire que la somme des tailles des images compressées correspondant à une période donnée de la vidéo, typiquement une seconde, est constante. Cela n'implique pas forcément que toutes les images sont compressées à une taille constante. Les tailles des images compressées peuvent varier légèrement dans la mesure où on respecte la contrainte pour une période donnée.

Lors du processus de compression, une relation peut être faite entre la valeur 'r' du débit de la séquence compressée et la valeur 'Q' de quantification utilisée lors de la phase de compression. L'algorithme et la modélisation utilisés sont, par exemple, de classe MPEG donc par prédiction puis transformation spatio-fréquentielle puis quantification.

Il a été montré que cette relation pouvait prendre la forme suivante :

$$\ln(r) = \alpha.Q + \sigma \; ; \qquad\qquad \text{eq. 1}$$

où 'r' est donc le débit de la séquence compressée, 'Q' le facteur de quantification, $\sigma$ et $\alpha$ sont deux paramètres que l'on obtient lors de tests. Empiriquement $\sigma$ correspond à la taille théorique de l'image pour Q=0, c'est-à-dire en l'absence de quantification, soit une mesure de complexité intrinsèque de l'image ayant une valeur élevée si l'image est complexe et une valeur basse si l'image est peu complexe.

Cette équation peut également s'écrire sous la forme suivante :

$$e^{\sigma} = re^{-\alpha Q} \; ; \qquad\qquad \text{eq. 2}$$

ou encore :

$$Q = \alpha^{-1} \ln(\frac{r}{e^{\sigma}}) \qquad\qquad \text{eq. 3}$$

Cette équation a été déterminée en utilisant des régressions linéaires, et la qualité de prédiction est bonne. Il a été déterminé que, pour des séquences au format QVGA, c'est-à-dire quart de VGA composées d'images de taille 320 x 240 pixels, les paramètres $\sigma$ et $\alpha$ ont des valeurs d'environ 10 et -0,1 pour 'Q' variant typiquement de 10 à 50, et 'r' exprimé en kilobit/s. Ces valeurs varient d'une séquence à une autre et d'une image à une autre dans des proportions allant de 10 à 20 pour cent. Ces valeurs ne sont pas totalement indépendantes et une estimation rapide donne :

$$\sigma = -50\alpha + 5 \; ; \qquad\qquad \text{eq. 4}$$

Ces équations peuvent être utilisées pour calculer une valeur approchée de la taille d'une image compressée lorsque l'on fait varier le facteur de quantification 'Q' appliqué sans refaire la compression effective de l'image. La valeur de $\alpha$ ne peut être connue qu'après deux passes, en conséquence et conformément aux tests, on utilise une valeur approchée de $\alpha$ appelée $\alpha$ qui vaut -0,125 pour une image 'P' et -0,09 pour une image 'I'.

$\sigma$ est une valeur logarithmique, par facilité arithmétique on utilisera plutôt la valeur $e^{\sigma}$. Cette valeur, qui caractérise la complexité intrinsèque de l'image, est inconnue pour l'image courante sur laquelle on travaille. On utilisera avantageusement une valeur estimée calculée sur quelques images précédentes, typiquement les images correspondant à une séquence d'une seconde précédent l'image courante appelée $e^{\sigma'}$.

Connaissant pour l'image courante des valeurs estimées $\tilde{\alpha}$ et $e^{\sigma'}$, étant donné un débit ciblé $\tilde{r}$, l'équation eq. 3 nous permet de trouver une valeur estimée du facteur de quantification pouvant être appliqué à l'image courante pour viser le débit recherché. On peut également à l'inverse estimer la taille de l'image compressée étant donné un facteur de quantification Q donné.

Ce procédé peut être généralisé en utilisant le facteur Lagrangien '$\lambda$' au lieu du facteur de quantification 'Q' et peut donc être établi pour le facteur de compression 'C'.

Les algorithmes connus de compression à un débit constant provoquent généralement des variations brutales du facteur de quantification en fonction de la complexité des images à compresser. Ces variations brutales peuvent entraîner une variation sensible de la qualité perçue des images lors de la décompression de la séquence. Cet effet est gênant. L'invention vise donc à lisser les variations du facteur de quantification et à optimiser ce facteur pour d'une part éviter de trop grandes variations d'une image à l'autre et d'autre part améliorer la qualité des images en utilisant les facteurs de quantification les plus faibles possibles tout en respectant les contraintes de compression.

L'algorithme général de fonctionnement du procédé de compression selon l'exemple de réalisation de l'invention est illustré Fig. 2. Lors d'une première étape 2.1 on effectue une première compression selon une technique connue de l'art antérieur de type MPEG. La compression peut être réalisée à débit strictement constant pour se placer dans des conditions proches de l'objectif. Cette étape permet en outre d'extraire des paramètres relatifs à cette première phase de compression. Ainsi, pour chaque image de la séquence on extrait au moins les paramètres suivants : le numéro 'i' de l'image, le type 'I' ou 'P' de l'image, le facteur de quantification utilisé $Q_i$ et la taille de l'image $T_i$. On obtient donc en particulier la série {Q} des valeurs du facteur de quantification utilisé pour chaque image. Il s'ensuit une étape de normalisation 2.2 de ces valeurs du facteur de quantification. Lors de cette étape, on va ajuster les valeurs du facteur de quantification en relâchant quelque peu la contrainte de débit strictement constant. Pour ce faire, on modélise le tampon du récepteur chargé de la restitution de la séquence et donc dans un premier temps de la décompression. Le niveau de remplissage de ce tampon est modélisé et la contrainte de strict débit constant est assouplie pour devenir une contrainte de maintien du niveau de remplissage du tampon destinataire entre deux valeurs cibles, une valeur minimum et une valeur maximum. De fait, le fonctionnement de la chaîne de diffusion de la séquence est assuré dès lors que cette contrainte est respectée et que l'on évite le débordement ou la famine au niveau du tampon du récepteur de la séquence. Lors de cette phase de normalisation, on intervient donc sur les valeurs du facteur de quantification pour optimiser ce facteur sous la contrainte du tampon du récepteur prévu pour la décompression de la séquence. Cette étape se déroule avantageusement sans nouvelle compression de l'image dont la taille est alors estimée en utilisant les formules décrites plus haut. Alternativement, la taille exacte pourrait être obtenue en recompressant l'image.

Une fois les valeurs du facteur de quantification ainsi normalisées, une étape 2.3 optionnelle d'optimisation de ces valeurs par une descente de gradient peut intervenir. Cette étape permet d'ajuster au mieux la valeur du facteur de quantification au minimum local. Elle permet de minimiser la distance Euclidienne (MSE), ou toute autre métrique plus adaptée, entre la valeur locale de 'Q' et une valeur moyenne optimale des valeurs de 'Q', par exemple Q constant sur la séquence. Au cours de cette étape optionnelle, avantageusement, l'image n'est pas non plus recompressée et sa taille est estimée en utilisant les formules ci-dessus pour les nouvelles valeurs du facteur de quantification utilisé. Mais il va de soi qu'il serait possible de recompresser l'image.

Une autre étape optionnelle 2.4 vise à privilégier la qualité des images compressées de manière intrinsèque, les images de type 'I', car leur qualité « se propage » dans les images P suivantes qui bénéficient donc à moindre coût du surcroît de qualité de l'image I précédente. On diminue, par exemple, d'une unité la valeur du facteur de quantification pour ces images.

Une fois les nouvelles valeurs des facteurs de quantification obtenues par l'étape de normalisation et les éventuelles étapes de descente de gradient et d'ajustement on procède à une nouvelle étape de compression 2.5 utilisant ces nouvelles valeurs du facteur de quantification.

De façon plus générale, cette technique de compression peut s'appliquer sur une séquence formant une fenêtre glissante du flux diffusé en direct (*live* en anglais). L'avantage étant d'analyser par avance (*lookahead* en anglais) la complexité des prochaines scènes. Le désavantage étant la latence d'encodage induite par la longueur de la fenêtre glissante.

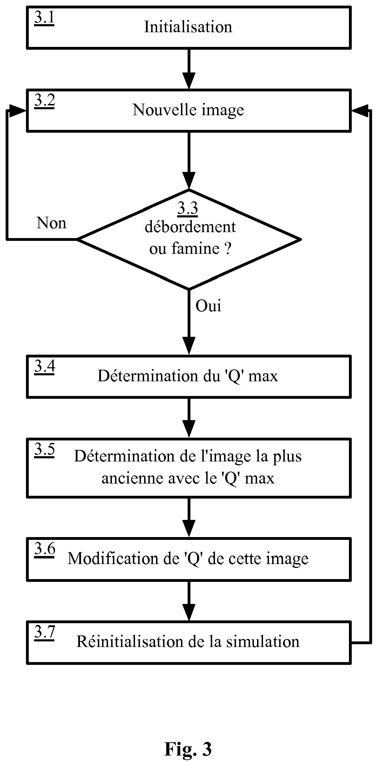

Selon un exemple de réalisation de l'invention, l'étape de normalisation se fait en fonction de la taille de l'image compressée obtenue et du tampon du récepteur simulé. On simule le niveau de remplissage du tampon du récepteur. Cette simulation pose le postulat d'un remplissage du tampon à un débit constant en quantité de données composant des images de tailles variables. Ces tailles sont obtenues à partir des données de la première étape de compression ajustées par les estimations obtenues par le modèle décrit plus haut lorsque l'on fait varier la valeur du facteur de quantification 'Q'. On considère également que le tampon se vide à un rythme donné en terme de nombre d'images par seconde fixé par la restitution de la séquence vidéo. Ce tampon est initialisé à un niveau de remplissage initial arbitraire qui peut, par exemple correspondre à un tampon à moitié plein. Son niveau de remplissage est mis à jour pour chaque image et un test de débordement ou de famine du tampon est exécuté. Tant que le tampon n'est pas sujet à un débordement ou à une famine, la valeur du facteur de quantification 'Q' n'est pas modifiée. La Fig. 3 illustre cette étape de normalisation. Lors d'une étape 3.1, on initialise le niveau de remplissage du tampon à la moitié de sa capacité. Pour chaque nouvelle image, on calcule lors de l'étape 3.2 le nouveau niveau de remplissage du tampon en fonction de la taille de la nouvelle image et en tenant compte de la consommation des données par la décompression. Lors de l'étape 3.3, on teste si ce nouveau niveau de remplissage provoque un débordement ou une famine du tampon. Ce débordement ou cette famine peuvent être définis strictement par un tampon vide ou plein ou défini relativement à des seuils minimum et maximum donnés. Si ce n'est pas le cas, on boucle sur l'image suivante. Si c'est le cas, on passe à l'étape 3.4 où l'on détermine quelle est la valeur extrémale du facteur de quantification associé à l'une des images déjà traitée dans la séquence. Une fois cette valeur extrémale identifiée, on peut avantageusement chercher l'image la plus ancienne dans la séquence associée à cette valeur extrémale du facteur de quantification lors de l'étape 3.5. Une fois que cette image est déterminée, c'est donc l'image la plus ancienne associée à la valeur extrémale du facteur de quantification. Intuitivement, si une image a un Q maximal, c'est qu'elle est plus altérée que la moyenne des images et est donc celle qui bénéficiera le plus d'une diminution du facteur Q. Respectivement, si une image a un Q minimal, c'est qu'elle est moins altérée que la moyenne des images et est donc celle qui souffrira le moins d'une augmentation du facteur Q. Le fait de choisir l'image la plus ancienne permet de se donner plus de souplesse dans la suite de l'algorithme qui pourra encore modifier toutes les images plus récentes. On va alors modifier la valeur du facteur de quantification associé à cette image de façon à modifier le niveau de remplissage du tampon lors de l'étape 3.6. Si le tampon est en famine, on va chercher à diminuer la quantité de données à consommer et donc à augmenter la valeur du facteur de quantification. Dans le cas inverse, si le tampon se trouve en débordement on va chercher à augmenter cette quantité de données en diminuant la valeur du facteur de quantification, par exemple d'une unité. Une fois adoptée cette nouvelle valeur du facteur de quantification, on reprend la simulation en réinitialisant le calcul de la simulation du niveau de remplissage du tampon à l'image dont on a modifié la valeur de 'Q', c'est l'étape 3.7. On effectue donc un retour arrière sur le calcul de la simulation jusqu'à cette image la plus ancienne affectée de la valeur de 'Q' la plus grande ou la plus petite et on reprend toute la simulation à partir de cette image. On continue le processus jusqu'à obtention d'une série normalisée de valeurs du facteur de quantification qui ne provoque pas de débordement ou de famine du tampon du récepteur. Cette technique a l'avantage de diminuer la dispersion des valeurs de 'Q'.

Avantageusement, on peut choisir 'une' des valeurs les plus élevées (ou respectivement les plus faibles) sans prendre 'la' valeur la plus élevée (ou plus faible) dans l'absolu. Cela permet par exemple d'obtenir une image plus ancienne.

L'étape optionnelle de descente de gradient consiste en une optimisation locale du facteur de quantification. On cherche, par exemple, à optimiser une erreur MSE (*Minimum Square Error* en anglais) ou toute autre métrique mesurant un objectif d'optimisation de la qualité par modification du facteur de quantification 'Q'. Cette métrique mesure la différence entre la distribution des valeurs Q et une distribution optimale de ces valeurs. Typiquement, la vitesse de descente de gradient est d'environ 0.5 qui se révèle un bon compromis entre la granularité des valeurs du facteur de quantification 'Q' et la vitesse de convergence de l'algorithme. La descente est stoppée par un seuil sur le calcul de l'erreur, par exemple 1%. Donc, dès que l'amélioration de l'erreur mesurée par le MSE est inférieure à 1% on stoppe la descente. La descente au rang 'n' est typiquement calculée par la formule suivante :

$$Q_{n+1} = V.(Mf(Q) - Q_n) \; ;$$

où $Mf(Q)$ représente une moyenne, éventuellement calculée sur une fenêtre glissante, de la valeur 'Q' obtenue après normalisation et 'V' la vitesse de descente de gradient. Donc, si l'erreur MSE obtenue avec la valeur $Q_{n+1}$ est inférieure de plus de 1% à l'erreur MSE obtenue pour la valeur $Q_n$ on continue sinon on arrête.

Avantageusement, 'Q' peut prendre des valeurs non entières pendant la descente.

Avantageusement, on effectue une boucle de rétroaction à ce niveau pour s'assurer que l'on reste bien dans les limites de tolérance du tampon du récepteur.

Avantageusement, on effectue en sus une étape d'ajustement de la valeur de 'Q' en fonction du type de l'image 'I' ou 'P'. Cette étape consiste en une diminution de la valeur de 'Q' d'une unité pour les images 'I'. Cette étape a pour effet de privilégier la qualité des images 'I' primordiale lors de la décompression.

À l'issue de ces étapes, on obtient donc une série normalisée et éventuellement optimisée de la valeur du facteur de quantification 'Q' associée à chaque image de la séquence. Il reste alors à réaliser une nouvelle compression à l'aide de cette série de facteurs de quantification.

Tout le procédé peut être généralisé en utilisant le facteur de compression 'C' en lieu et place du facteur de quantification 'Q'.

Le procédé ici décrit peut être implémenté sous la forme de composant électronique dédié ou encore programmé sur un dispositif de traitement de l'information tel qu'un ordinateur courant.

## Revendications

1. Procédé de compression d'une séquence vidéo qui comprend les étapes suivantes :

   - une première étape où l'on effectue la compression à débit constant de la séquence, la somme des tailles des images compressées correspondant à une période donnée de la vidéo étant constante, et au cours de laquelle sont extraits pour chaque image sa taille en octets, le facteur de compression utilisé;
   - une étape de normalisation des valeurs du facteur de compression associé à chaque image pour optimiser ce facteur sous la contrainte du tampon du récepteur prévu pour la décompression de la séquence ;
   - une seconde étape de compression de la séquence utilisant les valeurs normalisées du facteur de compression pour chaque image de la séquence ;

   où l'étape de normalisation comprend la simulation du niveau de remplissage du tampon du récepteur prévu pour la décompression de la séquence ; et où la simulation du niveau de remplissage du tampon du récepteur prévu pour la décompression de la séquence comprend les étapes suivantes :

   - une étape d'initialisation du tampon à une valeur initiale arbitraire;
   - pour chaque nouvelle image de la séquence, le calcul d'un nouveau niveau de remplissage en fonction de la taille de la nouvelle image et en tenant compte de la consommation des données par la décompression;

- dans le cas où il n'y a ni débordement ni famine du tampon, on boucle sur l'image suivante;
- dans le cas où il y a débordement ou famine, une étape de détermination d'une image déjà traitée de la séquence, associée à une valeur extrémale du facteur de compression associé à ces images déjà traitées, l'image déterminée étant la plus ancienne dans la séquence, associée à cette valeur extrémale ;
- une étape de modification de la valeur du facteur de compression associée à cette image déterminée, diminuant la taille de l'image en cas de famine, augmentant la taille de l'image en cas de débordement; et
- une étape de retour arrière sur le calcul de la simulation jusqu'à cette image déterminée.

**2.** Procédé selon la revendication 1, **caractérisé en ce qu'**il comprend en outre, suivant l'étape de normalisation, une étape d'optimisation locale de la valeur du facteur de compression de chaque image.

**3.** Procédé selon la revendication 2, **caractérisé en ce que** l'étape d'optimisation locale de la valeur du facteur de compression 'C' est une étape de descente de gradient pour minimiser une distance mesurée entre les valeurs locales de 'c' et les valeurs locales optimales de 'C'.

**4.** Procédé selon l'une des revendications 1 à 3, **caractérisé en ce qu'**il comprend en outre, précédent la seconde étape de compression, une étape d'ajustement de la valeur du facteur de compression en fonction du type, 'I' ou 'P', de l'image, selon que l'image est compressée de manière intrinsèque ou pas.

**5.** Procédé selon l'une des revendications 1 à 4, **caractérisé en ce que** l'étape de normalisation et/ou l'étape d'optimisation locale comprennent une étape d'estimation de la taille de l'image compressée en fonction de la valeur du facteur de compression à l'aide d'un modèle liant ces valeurs.

**6.** Procédé selon la revendication 1, **caractérisé en ce que** l'étape de retour arrière sur le calcul comprend la réinitialisation du calcul de la simulation du niveau de remplissage du tampon en fonction de l'image déterminée.

**7.** Procédé selon la revendication 1, **caractérisé en ce que** la valeur initiale arbitraire correspond à un tampon à moitié plein.

**8.** Procédé de compression d'un flux diffusé en direct, **caractérisé en ce que** le procédé selon l'une des revendications 1 à 7 est appliqué sur une séquence formant une fenêtre glissante du flux diffusé.

**9.** Dispositif de compression d'une séquence d'image **caractérisé en ce qu'**il comprend:

- des moyens pour effectuer une première étape de compression de la séquence à débit constant, la somme des tailles des images compressées correspondant à une période donnée de la vidéo étant constante ;
- des moyens de normalisation des valeurs du facteur de compression associé à chaque image pour optimiser ce facteur sous la contrainte du tampon du récepteur prévu pour la décompression de la séquence ;
- des moyens d'effectuer une seconde étape de compression de la séquence utilisant les valeurs normalisées du facteur de compression pour chaque image de la séquence, où les moyens de normalisation comprennent des moyens pour la simulation du niveau de remplissage du tampon du récepteur prévu pour la décompression de la séquence ;

et où les moyens pour la simulation du niveau de remplissage du tampon du récepteur prévu pour la décompression de la séquence comprennent :

- des moyens d'initialisation du tampon à une valeur initiale arbitraire;
- pour chaque nouvelle image de la séquence, des moyens de calcul d'un nouveau niveau de remplissage en fonction de la taille de la nouvelle image et en tenant compte de la consommation des données par la décompression;
- dans le cas où il n'y a ni débordement ni famine du tampon, des moyens pour boucler sur l'image suivante;
- dans le cas où il y a débordement ou famine, des moyens de détermination d'une image déjà traitée de la séquence associée à une valeur extrémale du facteur de compression associé à ces images déjà traitées, l'image déterminée étant la plus ancienne dans la séquence, associée à cette valeur extrémale;
- des moyens de modification de la valeur du facteur de compression associée à cette image déterminée, diminuant la taille de l'image en cas de famine, augmentant la taille de l'image en cas de débordement;
- des moyens de retour arrière sur le calcul de la simulation jusqu'à cette image déterminée.

**Patentansprüche**

1.  Verfahren zum Komprimieren einer Videosequenz, das nachfolgende Schritte umfasst:

    - einen ersten Schritt, bei dem das Komprimieren der Sequenz mit konstanter Rate erfolgt, wobei die Summe der Größen der komprimierten Bilder, die einer gegebenen Zeitspanne des Videos entsprechen, konstant ist, und bei dem für jedes Bild dessen Größe in Bytes und der verwendete Komprimierungsfaktor extrahiert werden;
    - einen Schritt des Normalisierens der Werte des Komprimierungsfaktors, der jedem Bild zugeordnet ist, um diesen Faktor unter der Einschränkung des Puffers des Empfängers zu optimieren, der für die Dekomprimierung der Sequenz vorgesehen ist;
    - einen zweiten Schritt des Komprimierens der Sequenz unter Verwendung der normalisierten Werte des Komprimierungsfaktors für jedes Bild der Sequenz;

    wobei der Schritt des Normalisierens das Simulieren des Füllstands des Puffers des Empfängers umfasst, der für die Dekomprimierung der Sequenz vorgesehen ist;
    und wobei das Simulieren des Füllstands des Puffers des Empfängers, der für die Dekomprimierung der Sequenz vorgesehen ist, die nachfolgenden Schritte umfasst:

    - einen Schritt des Initialisierens des Puffers mit einem beliebigen Anfangswert;
    - für jedes neue Bild der Sequenz, Berechnen eines neuen Füllstands in Abhängigkeit von der Größe des neuen Bildes und unter Berücksichtigung des Datenverbrauchs durch die Dekomprimierung;
    - in dem Fall, in dem weder eine Über- noch Untersättigung des Puffers vorliegt, Übergehen auf das nächste Bild;
    - in dem Fall, in dem eine Über- oder Untersättigung vorliegt, einen Schritt des Ermittelns eines bereits verarbeiteten Bildes der Sequenz, das einem Extremwert des Komprimierungsfaktors zugeordnet ist, der diesen bereits verarbeiteten Bildern zugeordnet ist, wobei das ermittelte Bild das älteste in der Sequenz ist, das diesem Extremwert zugeordnet ist;
    - einen Schritt des Modifizierens von dem Wert des Komprimierungsfaktors, der diesem ermittelten Bild zugeordnet ist, wobei bei Untersättigung die Größe des Bildes verringert und bei Übersättigung die Größe des Bildes erhöht wird; und
    - einen Schritt des Zurückkehrens zur Berechnung der Simulation bis zu diesem ermittelten Bild.

2.  Verfahren nach Anspruch 1, **dadurch gekennzeichnet, dass** es ferner nach dem Schritt des Normalisierens einen Schritt des bereichsweisen Optimierens von dem Wert des Komprimierungsfaktors von jedem Bild umfasst.

3.  Verfahren nach Anspruch 2, **dadurch gekennzeichnet, dass** der Schritt des lokalen Optimierens des Werts des Komprimierungsfaktors 'C' ein Schritt des Gradientenabstiegs ist, um eine gemessene Entfernung zwischen den lokalen Werten von c und den optimalen lokalen Werten von 'C' zu minimieren.

4.  Verfahren nach einem der Ansprüche 1 bis 3, **dadurch gekennzeichnet, dass** es ferner vor dem zweiten Schritt des Komprimierens einen Schritt des Anpassens des Werts des Komprimierungsfaktors in Abhängigkeit von dem Bildtyp 'I' oder 'P' ist, je nachdem, ob das Bild intrinsisch komprimiert ist oder nicht.

5.  Verfahren nach einem der Ansprüche 1 bis 4, **dadurch gekennzeichnet, dass** der Schritt des Normalisierens und/oder der Schritt des lokalen Optimierens einen Schritt des Schätzens der Größe des komprimierten Bildes in Abhängigkeit von dem Wert des Komprimierungsfaktors unter Verwendung eines Modells, das diese Werte verknüpft, umfassen.

6.  Verfahren nach Anspruch 1, **dadurch gekennzeichnet, dass** der Schritt des Rückkehrens zur Berechnung das Zurücksetzen der Berechnung der Simulation des Füllstands des Puffers in Abhängigkeit von dem ermittelten Bild umfasst.

7.  Verfahren nach Anspruch 1, **dadurch gekennzeichnet, dass** der beliebige Anfangswert einem halbvollen Puffer entspricht.

8.  Verfahren zum Komprimieren eines Live-Streams, **dadurch gekennzeichnet, dass** das Verfahren nach einem der Ansprüche 1 bis 7 auf eine Sequenz angewandt wird, die ein gleitendes Fenster des Live-Streams bildet.

9.  Vorrichtung zum Komprimieren einer Bildsequenz,

**dadurch gekennzeichnet, dass** sie enthält:

- Einrichtungen zum Ausführen eines ersten Schritts des Komprimierens der Sequenz mit konstanter Rate, wobei die Summe der Größen der komprimierten Bilder, die einer gegebenen Zeitspanne des Videos entsprechen, konstant ist;
- Einrichtungen zum Normalisieren der Werte des Komprimierungsfaktors, der jedem Bild zugeordnet ist, um diesen Faktor unter der Einschränkung des Puffers des Empfängers zu optimieren, der für die Dekomprimierung der Sequenz vorgesehen ist;
- Einrichtungen zum Ausführen eines zweiten Schritts des Komprimierens der Sequenz unter Verwendung der normalisierten Werte des Komprimierungsfaktors für jedes Bild der Sequenz, wobei die Normalisierungseinrichtungen Einrichtungen zum Simulieren des Füllstands des Puffers des Empfängers umfassen, der für die Dekomprimierung der Sequenz vorgesehen ist;

und wobei die Einrichtungen zum Simulieren des Füllstands des Puffers des Empfängers, der für die Dekomprimierung der Sequenz vorgesehen ist, enthalten:

- Einrichtungen zum Initialisieren des Puffers mit einem beliebigen Anfangswert;
- für jedes neue Bild der Sequenz, Einrichtungen zum Berechnen eines neuen Füllstands in Abhängigkeit von der Größe des neuen Bildes und unter Berücksichtigung des Datenverbrauchs durch die Dekomprimierung;
- in dem Fall, in dem weder eine Über- noch Untersättigung des Puffers vorliegt, Einrichtungen zum Übergehen auf das nächste Bild;
- in dem Fall, in dem eine Über- oder Untersättigung vorliegt, Einrichtungen zum Ermitteln eines bereits verarbeiteten Bildes der Sequenz, das einem Extremwert des Komprimierungsfaktors zugeordnet ist, der diesen bereits verarbeiteten Bildern zugeordnet ist, wobei das ermittelte Bild das älteste in der Sequenz ist, das diesem Extremwert zugeordnet ist;
- Einrichtungen zum Modifizieren des Werts des Komprimierungsfaktors, der diesem ermittelten Bild zugeordnet ist, wobei bei Untersättigung die Größe des Bildes verringert und bei Übersättigung die Größe des Bildes erhöht wird; und
- Einrichtungen zum Zurückkehren zur Berechnung der Simulation bis zu diesem ermittelten Bild.

## Claims

1. Method of compressing a video sequence which comprises the following steps:

- a first step in which the compression is carried out at constant bit rate of the sequence, the sum of the sizes of the compressed images corresponding to a given period of the video being constant, and during which, for each image, the size thereof in bytes and the compression factor used are extracted;
- a step of normalising the values of the compression factor associated with each image in order to optimise this factor under the constraint of the buffer of the receiver provided for decompressing the sequence;
- a second step of compressing the sequence using the normalised values of the compression factor for each image in the sequence;

where the normalisation step comprises the simulation of the filling level of the buffer of the receiver provided for decompressing the sequence;
and where the simulation of the filling level of the buffer of the receiver provided for decompressing the sequence comprises the following steps:

- a step of initialising the buffer to an arbitrary initial value;
- for each new image in the sequence, calculating a new filling level according to the size of the new image and taking account of the consumption of the data by the decompression;
- if there is neither overflow nor famine of the buffer, the following image is looped onto;
- if there is overflow or famine, a step of determining an image already processed in the sequence, associated with an extremal value of the compression factor associated with these images already processed, the determined image being the oldest in the sequence, associated with that extremal value;
- a step of modifying the value of the compression factor associated with this determined image, reducing the size of the image in case of famine, increasing the size of the image in case of overflow; and
- a step of returning back to the calculation of the simulation as far as this determined image.

**2.** Method according to claim 1, **characterised in that** it also comprises, following the normalisation step, a step of local optimisation of the value of the compression factor of each image.

**3.** Method according to claim 2, **characterised in that** the step of local optimisation of the value of the compression factor "C" is a step of gradient descent in order to minimise a distance measured between the local values of "c" and the optimum local values of "C".

**4.** Method according to one of claims 1 to 3, **characterised in that** it also comprises, preceding the second compression step, a step of adjusting the value of the compression factor according to the type, "I" or "P", of the image, depending on whether or not the image is compressed intrinsically.

**5.** Method according to one of claims 1 to 4, **characterised in that** the normalisation step and/or the local optimisation step comprise a step of estimating the size of the compressed image according to the value of the compression factor using a model linking these values.

**6.** Method according to claim 1, **characterized in that** the step of returning back to the calculation comprises reinitialising the calculation of the stimulation of the filling level of the buffer according to the determined image.

**7.** Method according to claim 1, **characterized in that** the initial arbitrary value corresponds to a buffer half full.

**8.** Method of compressing a stream broadcast live, **characterised in that** the method according to one of claims 1 to 7 is applied to a sequence forming a sliding window of the broadcast stream.

**9.** Device for compressing an image sequence, **characterised in that** it comprises:

  - means for performing a first step of compressing the sequence at a constant bit rate, the sum of the sizes of the compressed images corresponding to a given period of the video being constant;
  - means for normalising the values of the compression factor associated with each image in order to optimise this factor under the constraint of the buffer of the receiver provided for decompressing the sequence;
  - means for performing a second step of compressing the sequence using the normalised values of the compression factor for each image in the sequence, where the normalisation means comprise means for simulating the filling level of the buffer of the receiver provided for decompressing the sequence;
  - and in which the means for simulating the filling level of the buffer of the receiver provided for decompressing the sequence comprise:
  - means for initialising the buffer to an arbitrary initial value;
  - for each new image in the sequence, means for calculating a new filling level according to the size of the new image and taking account of the consumption of the data by the decompression;
  - if there is neither overflow nor famine of the buffer, means for looping onto the following image;
  - if there is overflow or famine, means for determining an image already processed in the sequence associated with an extremal value of the compression factor associated with these images already processed, the determined image being the oldest in the sequence, associated with that extremal value;
  - means for modifying the value of the compression factor associated with this determined image, reducing the size of the image in case of famine, increasing the size of the image in case of overflow;
  - means for returning back to the calculation of the simulation as far as this determined image.

1.1

1.2

1.3

| P | I | P | P | P | P | I | P | P | P | P | P | I | P | P | P | P | P |

Qi Qi Qi Qi Qi Qi Qi Qi Qi Qi Qi Qi Qi Qi Qi Qi Qi Qi

Ti Ti Ti Ti Ti Ti Ti Ti Ti Ti Ti Ti Ti Ti Ti Ti Ti Ti

**Fig. 1**

| 2.1 | Compression et extraction paramètres |
| 2.2 | Normalisation de {Q} |
| 2.3 | Descente de gradient |
| 2.4 | Ajustement de Q pour les images I |
| 2.5 | Compression |

**Fig. 2**

**3.1** Initialisation

**3.2** Nouvelle image

**3.3** débordement ou famine ?

Non

Oui

**3.4** Détermination du 'Q' max

**3.5** Détermination de l'image la plus ancienne avec le 'Q' max

**3.6** Modification de 'Q' de cette image

**3.7** Réinitialisation de la simulation

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2907989

**Littérature non-brevet citée dans la description**

- **CAI J et al.** Two-pass video encoding for low-bit-rate streaming applications. *VISUAL COMMUNICATIONS AND IMAGE PROCESSING,* 21 Janvier 2002